Europäisches Patentamt

(19) European Patent Office

Office européen des brevets

(11) Veröffentlichungsnummer: **0 006 528**
**B1**

# EUROPÄISCHE PATENTSCHRIFT

(45) Veröffentlichungstag der Patentschrift:
**11.03.81**

(21) Anmeldenummer: **79101895.5**

(22) Anmeldetag: **11.06.79**

(51) Int. Cl.³: **A 22 C 13/00**

(54) Schlauchfolien aus Polyamid.

(30) Priorität: **22.06.78 DE 2827384**

(43) Veröffentlichungstag der Anmeldung:
**09.01.80 Patentblatt 80/1**

(45) Bekanntmachung des Hinweises auf die Patenterteilung:
**11.03.81 Patentblatt 81/10**

(84) Benannte Vertragsstaaten:
**AT BE CH DE FR GB NL SE**

(56) Entgegenhaltungen:
**DE-A-1 939 576**
**DE-A-2 330 774**
**FR-A-2 343 018**

(73) Patentinhaber: **BASF Aktiengesellschaft,
Carl-Bosch-Strasse 38, D-6700 Ludwigshafen (DE)**

(72) Erfinder: **Reimann, Horst, Dr., Adelheidstrasse 26,
D-6520 Worms (DE)**
Erfinder: **Weiss, Hans-Peter, Dr., Moltkestrasse 58,
D-6701 Altrip (DE)**
Erfinder: **Schmidt, Franz, Dr., Trommstrasse 3,
D-6800 Mannheim 1 (DE)**
Erfinder: **Kalsch, Herbert, Dr., Otto-Dill-Strasse 29,
D-6700 Ludwigshafen (DE)**

ACTORUM AG.

Schlauchfolien aus Polyamid

Die Erfindung betrifft die Verwendung von Polyamid 69 zur Herstellung von Schlauchfolien für die Verpackung von Fleisch- und Wurstwaren, insbesondere für Koch- oder Brühwürste, welche nach der Verpackung auf ca. 70° bis 100°C erhitzt werden.

Schlauchfolien, die für diesen Zweck verwendet werden sollen, müssen einer Reihe von Anforderungen entsprechen. Diese Anforderungen resultieren zum einen aus dem Herstellungsprozess der Koch- und Brühwürste, zum anderen aus der Lagerung der Würste.

Nach dem Füllen der Schlauchfolie mit der Fleisch-, bzw. Wurstmasse und Verschliessen werden die Würste mit Wasser oder Dampf auf 70° bis 100°C erhitzt. Das Material, aus dem die Schlauchfolie besteht, muss daher eine Temperaturbeständigkeit von mindestens 100°C aufweisen, physiologisch unbedenklich sein und eine hohe Festigkeit bei gleichzeitig guter Flexibilität besitzen.

Polyamid 6 wurde zwar diesen Anforderungen genügen. In Kontakt mit Wasser beim Brühvorgang nimmt es jedoch sehr viel Wasser auf; die Folie dehnt sich aus und die Wurst weist nach dem Erkalten ein faltiges Aussehen auf. Weiterhin trocknet bei der Lagerung die Wurst schnell aus, da die Wasserdurchlässigkeit bei Polyamid 6 sehr hoch ist.

Man hat versucht, diese Schwierigkeiten zu umgehen durch Verwundung von Polyamid 11 (DE-A-1 939 576) oder Polyamid 12, die eine geringere Wasserpermeabilität und Wasseraufnahme besitzen. Schauchfolien aus diesen Kunststoffen haben jedoch den Nachteil, dass sie ebenfalls zur Faltenbildung neigen und dass die darin abgepackte Wurstmasse nicht sehr lange lagerfähig ist.

Man hat auch schon vorgeschlagen, für diesen Zweck Mehrschichtfolien aus Polyamid 6 bzw. Polyamid 66 und Polyamid 11 bzw. Polyamid 12 einzusetzen (US-Patent 5 762 986 und DOS 2 358 560). Die Herstellung von Mehrschichtfolien und insbesondere von Mehrschichtschlauchfolien ist jedoch sehr aufwendig und teuer. Weiterhin ist wegen der geringen Verträglichkeit von Polyamid 6 bzw. Polyamid 66 mit Polyamid 11 bzw. Polyamid 12 die Verbundfestigkeit nicht optimal, beide Schichten können sich trennen.

Aufgabe der vorliegenden Erfindung war es also, eine Schlauchfolie zu schaffen, die nur aus einer Schicht besteht und gleichzeitig die genannten Nachteile nicht aufweist. Die erwünschten Eigenschaften sind hohe Festigkeit, geringe Permeabilität gegenüber Wasserdampf und Gasen, insbesondere Sauerstoff und Kohlendioxid, gute Thermoformbarkeit, gute Transparenz und hoher Glanz sowie gute Temperaturbeständigkeit.

Es wurde nun gefunden, dass bei Verwendung von Polyamid 69 als Material für Schlauchfolien diese Aufgabe gelöst wird.

Eine solche Folie zeichnet sich durch hohe Flexibilität verbunden mit hoher Festigkeit aus. Beim Brühen der Wurst wird die Schlauchfolie nicht faltig und ihre Weiterreissfestigkeit ist sehr gut. Die fertigen Würste weisen bei Verwendung der Schlauchfolien aus Polyamid 69 eine längere Lagerfähigkeit auf als bei Verwendung von Schlauchfolien aus Polyamid 12.

Polyamid 69 ist ein an sich bekannter Kunststoff, der vor allem als Material für die Kabelbeschichtung verwendet wird. Polyamid 69 wird hergestellt durch Polykondensation von Hexamethylendiamin und Azelainsäure.

Bei der erfindungsgemässen Verwendung kann das Polyamid 69 noch übliche Zusätze, wie Gleitmittel, Stabilisatoren, UV-Schutzmittel, Keimbildner und Pigmente erhalten.

Im folgenden soll die Herstellung von Schlauchfolien aus Polyamid 69 beschrieben werden:

Auf dem Extruder mit einer Ringspaltdüse wurde ein Polyamid 69 einer relativen Viskosität von 3,2 bis 3,9 (gemessen 1-prozentig in konzentrierter Schwefelsäure) unter folgenden Bedingungen zu Schlauchfolien verarbeitet:

| | |
|---|---|
| Massetemperatur | 253°C |
| Abziehgeschwindigkeit | 10 m/min |
| Aufblasverhältnis | 1:2 |

Die Folie weist folgende Eigenschaften auf:

| | |
|---|---|
| Foliendicke | 50 ($\mu$m) |
| Feuchtigkeitsaufnahme (bei 23°/50% Luftfeuchtigkeit) | 1,4% |

Zug- und Reissfestigkeit nach DIN 53 455:

| | längs | quer |
|---|---|---|
| Streckspannung | 38 | 38 N.mm$^{-2}$ |
| Reissfestigkeit | 67 | 54 N.mm$^{-2}$ |
| Reissdehnung | 377 | 347% |
| Weiterreissfestigkeit (nach DIN 53 455) | 420 | 500 (N.mm$^{-2}$) |

Die Durchlässigkeit für $O_2$ wurde nach ASTM-D 1434 und für $H_2O$ nach DIN 53 122 bestimmt und auf 100$\mu$m Foliendicke normiert. Zum Vergleich wurden die Werte für Polyamid-6, Polyamid-11 und Polyamid-12 mit aufgeführt.

| Durchlässigkeit an 100 $\mu$m-Folien | PA-6 | PA-69 | PA-11 | PA-12 |
|---|---|---|---|---|
| $O_2$ (cm$^3$m$^{-2}$d$^{-1}$bar$^{-1}$) | 10 | 20 | 110 | 120 |
| $H_2O$ (g.m$^{-2}$.d$^{-1}$) | 84 | 6 | 5 | 4 |

**Patentanspruch**

Verwendung von Polyamiden zur Herstellung von Schlauchfolien für die Verpackung von Fleisch- und Wurstwaren, dadurch gekennzeichnet, dass Polyamid 69 verwendet wird.

**Claim**

Use of polyamides for the production of tubular film for packing meat, meat products and sausages, characterized in that polyamide 69 is used.

**Revendication**

Utilisation de polyamides pour la fabrication de pellicules tubulaires our l'emballage de la charcuterie, caractérisée en ce que le polyamide employé est du polyamide 6/9.